# EUROPEAN PATENT APPLICATION

(11) **EP 4 156 073 A1**
(43) Date of publication of application: **29.03.2023**
(21) Application number: 21808127.1
(22) Date of filing: 19.05.2021
(51) Int. Cl.: G06Q 50/10

(54) **COMPATIBILITY PREDICTION METHOD, COMPATIBILITY PREDICTION DEVICE, AND COMPATIBILITY PREDICTION PROGRAM**

(30) Priority: 19.05.2020 JP 2020087659
(71) Applicant: AJINOMOTO CO., INC., Chuo-ku Tokyo 104-8315 (JP)
(72) Inventor: HASHIMOTO, Takashi, Kawasaki-shi, Kanagawa 210-8681 (JP); NAKAHARA, Yuichi, Kawasaki-shi, Kanagawa 210-8681 (JP); IMAIZUMI, Akira, Kawasaki-shi, Kanagawa 210-8681 (JP); INOUE, Ippei, Kawasaki-shi, Kanagawa 210-8681 (JP); UMISHIO, Hiroshi, Kawasaki-shi, Kanagawa 210-8681 (JP); YAMADA, Megumi, Kawasaki-shi, Kanagawa 210-8681 (JP)
(74) Representative: Mewburn Ellis LLP
(86) International application number: PCT/JP2021/018932
(87) International publication number: WO 2021/235471

(57) **Abstract**

An object is to provide a compatibility prediction method, a compatibility prediction apparatus, and a compatibility prediction program that enable accurate and easy prediction of compatibility between food (such as sweets and meals) and drink (such as coffee) by measuring the aromas of the food and the drink. In the present embodiment, compatibility between prediction target food that is food targeted for compatibility prediction and prediction target drink that is drink targeted for the compatibility prediction is predicted based on a model for predicting the compatibility between the prediction target food and the prediction target drink, using measurements that are values related to predetermined information when aroma components of the prediction target food and the prediction target drink are measured as the predetermined information by a measuring instrument, or calculations calculated based on the measurements.

## Description

### TECHNICAL FIELD

The present invention relates to a compatibility prediction method, a compatibility prediction apparatus, and a compatibility prediction program.

### BACKGROUND ART

Patent Literature 1 describes a compatibility analysis method and a compatibility analysis apparatus for coffee and food (see paragraph 0006 of Patent Literature 1) .

### PRIOR ART REFERENCES

### PATENT DOCUMENT

Patent Literature 1: JP-A-2017-130142

### DISCLOSURE OF INVENTION

### PROBLEM TO BE SOLVED BY THE INVENTION

As described in the foregoing Patent Literature 1, there has heretofore been a demand to find out compatibility between coffee and food in advance. The compatibility is often evaluated, for example, by a human evaluator actually having the coffee and the food (so-called sensory evaluation). However, the sensory evaluation has had problems like variations between individuals are large, evaluations need to be made by a lot of evaluators, and evaluators need to be trained up.

The present invention has been achieved in view of the foregoing problems, and an object thereof is to provide a compatibility prediction method, a compatibility prediction apparatus, and a compatibility prediction program that enable accurate and easy prediction of compatibility between food (such as sweets and meals) and drink (such as coffee) by measuring the aromas of the food and the drink.

### MEANS FOR SOLVING PROBLEMS

To solve the problems described above thereby achieving the object, a compatibility prediction method according to one aspect of the present disclosure includes a predicting step of predicting compatibility between prediction target food, which is food targeted for compatibility prediction, and prediction target drink, which is drink targeted for the compatibility prediction, based on a model for predicting the compatibility between the prediction target food and the prediction target drink, using measurements that are values related to predetermined information when a measuring instrument measures aroma components of the prediction target food and the prediction target drink as the predetermined information, or calculations calculated based on the measurements.

In the compatibility prediction method according to another aspect of the present disclosure, the predetermined information to be measured is measured by the aroma components being absorbed to an absorption portion that is a portion of the measuring instrument for the aroma components to be absorbed to.

In the compatibility prediction method according to still another aspect of the present disclosure, the predetermined information to be measured originates from a change in weight due to absorption of the aroma components to a sensitive membrane serving as the absorption portion fixed to a piezoelectric element disposed on a beam of the measuring instrument.

In the compatibility prediction method according to still another aspect of the present disclosure, the change in weight is detected as a change in a vibration frequency of the beam.

In the compatibility prediction method according to still another aspect of the present disclosure, the vibration frequency is a resonant frequency.

In the compatibility prediction method according to still another aspect of the present disclosure, the predetermined information to be measured is measured from the absorption portion of the measuring instrument for the aroma components to be absorbed to by the aroma components being absorbed to the absorption portion.

In the compatibility prediction method according to still another aspect of the present disclosure, the absorption portion of the measuring instrument includes an aptamer; and the predetermined information to be measured originates from a change in an intensity of single-wavelength reflected light from the aptamer due to absorption of the aroma components to the aptamer.

In the compatibility prediction method according to still another aspect of the present disclosure, the measurement is a value measured using a surface plasmon resonance method.

In the compatibility prediction method according to still another aspect of the present disclosure, when the measurements of a piece of the prediction target food or a portion of the prediction target drink are continuously measured, the measurements used for prediction are ones obtained within a time range where the measurements are stabilized or a time range where humidity is stabilized.

In the compatibility prediction method according to still another aspect of the present disclosure, the model is constructed using machine learning based on: measurements that are values related to predetermined information when the measuring instrument measures aroma components of training target food that is food targeted for the machine learning as the predetermined information, or calculations calculated based on the measurements; measurements that are values related to predetermined information when the measuring instrument measures aroma components of training target drink that is drink targeted for the machine learning as the predetermined information, or calculations calculated based on the measurements; and results of evaluation manually made of compatibility between the training target food and the training target drink.

In the compatibility prediction method according to still another aspect of the present disclosure, the compatibility is predicted by converting the compatibility into numbers at the predicting step.

In the compatibility prediction method according to still another aspect of the present disclosure, the prediction target food includes sweets or meals.

In the compatibility prediction method according to still another aspect of the present disclosure, the prediction target drink is coffee, sake, wine, or tea.

A compatibility prediction apparatus according to one aspect of the present disclosure includes a control unit, wherein the control unit includes a predicting unit that predicts compatibility, between prediction target food that is food targeted for the compatibility prediction and prediction target drink that is drink targeted for the compatibility prediction, based on a model for predicting the compatibility between the prediction target food and the prediction target drink, using measurements that are values related to predetermined information when a measuring instrument measures aroma components of the prediction target food and the prediction target drink as the predetermined information, or calculations calculated based on the measurements.

A compatibility prediction program according to one aspect of the present disclosure causes an information processing apparatus, including a control unit, to perform, the program including: a predicting step of predicting compatibility, between prediction target food that is food targeted for compatibility prediction and prediction target drink that is drink targeted for the compatibility prediction, based on a model for predicting the compatibility between the prediction target food and the prediction target drink, using measurements that are values related to predetermined information when a measuring instrument measures aroma components of the prediction target food and the prediction target drink as the predetermined information, or calculations calculated based on the measurements, to be executed by the control unit.

### EFFECTS OF THE INVENTION

The present invention provides an effect of enabling accurate and easy prediction of compatibility between food (such as sweets and meals) and drink (such as coffee) by measuring the aromas of the food and the drink.

### BRIEF DESCRIPTION OF THE DRAWINGS

FIG. 1 is a block diagram of an example of a configuration of a compatibility prediction apparatus;
FIG. 2 is a diagram of an example of a flow of compatibility prediction according to the present embodiment;
FIG. 3 is a diagram of an example of a flow of model construction according to the present embodiment;
FIG. 4 is a diagram of an example of a detailed flow of the model construction according to the present embodiment;
FIG. 5 is a diagram of a list of coffees, sweets, and meals that can be used to construct a compatibility prediction model;
FIG. 6 is a diagram of predicted values (vertical axis) of test data obtained by a model generated from teaching data, and actual measurements (horizontal axis) obtained by sensory evaluation, with sweets being divided into the teaching data and the test data;
FIG. 7 is a diagram of an example of results obtained by predicting compatibility (food pairings) between sweets and coffees using a model according to the present embodiment;
FIG. 8 is a diagram of an example of results obtained by predicting compatibility (food pairings) between food, mainly nibbles, and sake using a model according to the present embodiment;
FIG. 9 is a diagram of an example of results obtained by predicting compatibility (food pairings) between food, mainly cheeses, and wines using a model according to the present embodiment; and
FIG. 10 is a diagram of an example of results obtained by predicting compatibility (food pairings) between food, mainly sweets, and teas using a model according to the present embodiment.

### BEST MODE(S) FOR CARRYING OUT THE INVENTION

An embodiment of a compatibility prediction method, a compatibility prediction apparatus, and a compatibility prediction program will be explained in detail below with reference to the drawings. The present invention is not limited by the present embodiment.

### 1. Configuration

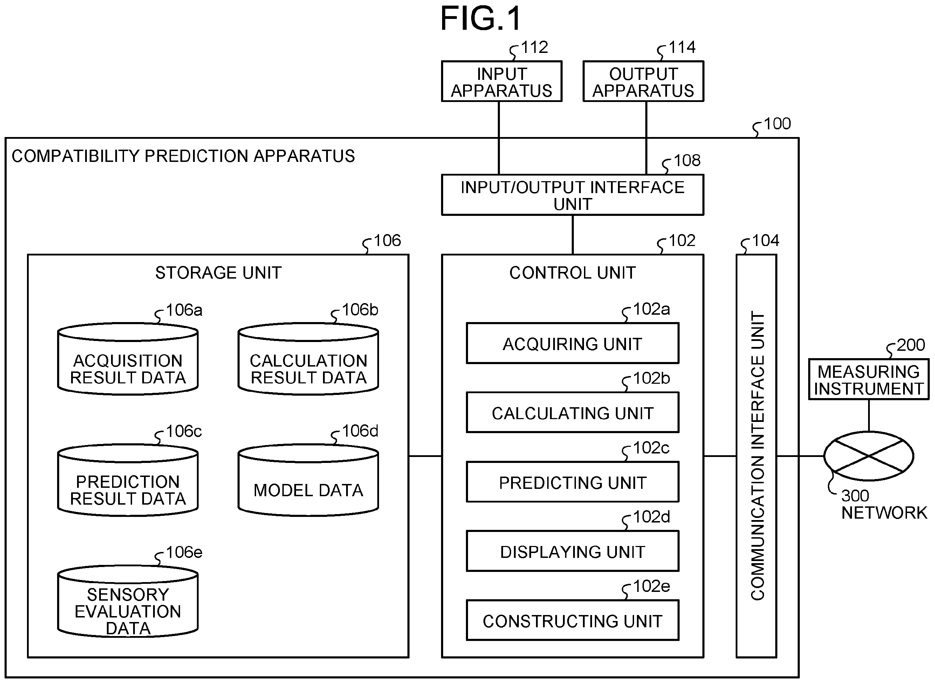

An example of a configuration of a compatibility prediction apparatus 100 according to the present embodiment will be explained with reference to FIG. 1. FIG. 1 is a block diagram of the example of the configuration of the compatibility prediction apparatus 100.

The compatibility prediction apparatus 100 is a commercially available desktop personal computer. Note that the compatibility prediction apparatus 100 is not limited to a stationary information processing apparatus such as a desktop personal computer, and may be a portable information processing apparatus such as a commercially available laptop personal computer, PDA (Personal Digital Assistant), smartphone, and tablet personal computer.

The compatibility prediction apparatus 100 includes a control unit 102, a communication interface unit 104, a storage unit 106, and an input/output interface unit 108. The components of the compatibility prediction apparatus 100 are communicably connected via given communication paths.

The communication interface unit 104 communicably connects the compatibility prediction apparatus 100 to a network 300 via a communication apparatus, such as a router, and a wired or wireless communication line, such as a dedicated line. The communication interface unit 104 has a function of communicating data with another apparatus via the communication line. The network 300 has a function of mutually communicably connecting the compatibility prediction apparatus 100 and a measuring instrument 200. Examples include the Internet and a LAN (Local Area Network).

An input apparatus 112 and an output apparatus 114 are connected to the input/output interface unit 108. As the output apparatus 114, a speaker and a printer can be used aside from monitors (including a home television set). As the input apparatus 112, a monitor that implements a pointing device function in cooperation with a mouse can be used aside from a keyboard, a mouse, and a microphone. The output apparatus 114 may hereinafter be referred to as a monitor 114, and the input apparatus 112 as a keyboard 112 or a mouse 112.

The storage unit 106 stores various databases, tables, files, and the like. A computer program for giving commands to a CPU (Central Processing Unit) to perform various types of processing in cooperation with an OS (Operating System) is recorded in the storage unit 106. For example, a memory device such as a RAM (Random Access Memory) and a ROM (Read Only Memory), a stationary disk device such as a hard disk, a flexible disk, and an optical disc can be used as the storage unit 106.

The storage unit 106 includes acquisition result data 106a, calculation result data 106b, prediction result data 106c, model data 106d, and sensory evaluation data 106e.

The acquisition result data 106a contains measurements acquired by an acquiring unit 102a to be described below (for example, raw data obtained by measurement using the measuring instrument 200).

The calculation result data 106b contains calculations calculated by a calculating unit 102b to be described below.

The prediction result data 106c contains predictions made by a predicting unit 102c to be described below (for example, a score indicating the compatibility between food and drink).

The model data 106d contains models constructed by a constructing unit 102e to be described below.

The sensory evaluation data 106e contains evaluations (sensory evaluations) manually made of the compatibility between food and drink.

The control unit 102 is a CPU or the like that controls the compatibility prediction apparatus 100 in a centralized manner. The control unit 102 includes an internal memory for storing control programs such as the OS, programs defining various processing procedures, and necessary data. The control unit 102 performs various types of information processing based on these stored programs.

In terms of functional concepts, the control unit 102 includes, for example, the following: (1) the acquiring unit 102a serving as an acquiring unit that acquires measurements related to predetermined information when the measuring instrument measures aroma components of prediction target food that is food targeted for compatibility prediction and prediction target drink that is drink targeted for the compatibility prediction as the predetermined information; (2) the calculating unit 102b serving as a calculating unit that calculates calculations based on the acquired measurements; (3) the predicting unit 102c serving as a predicting unit that predicts compatibility between the prediction target food and the prediction target drink based on a model for predicting the compatibility between the prediction target food and the prediction target drink, using the measurements that are the values related to the predetermined information when the measuring instrument measures the aroma components of the prediction target food that is the food targeted for the compatibility prediction and the prediction target drink that is the drink targeted for the compatibility prediction as the predetermined information, or the calculations calculated based on the measurements; (4) a displaying unit 102d serving as a displaying unit that displays the result of the prediction; and (5) the constructing unit 102e serving as a constructing unit that constructs the model. Of these units, the control unit 102 only needs to include at least the predicting unit 102c for the sake of performing the compatibility prediction according to the present embodiment. The units other than the predicting unit 102c are optional components.

The acquiring unit 102a acquires measurements that are values related to the predetermined information (for example, raw data obtained by measurement using the measuring instrument 200) when the measuring instrument 200 measures the aroma components of the prediction target food that is the food targeted for the compatibility prediction and the prediction target drink that is the drink targeted for the compatibility prediction as the predetermined information. For example, the predetermined information originates from a change in the intensity of reflected light, a change in color, or a change in weight.

The calculating unit 102b calculates the calculations based on the measurements acquired by the acquiring unit 102a, using a predetermined analysis tool (such as Excel, JMP, and R) and a predetermined analysis technique.

The predicting unit 102c predicts the compatibility between the prediction target food and the prediction target drink based on the model for predicting the compatibility between the prediction target food and the prediction target drink, using the measurements acquired by the acquiring unit 102a or the calculations calculated by the calculating unit 102b.

The displaying unit 102d displays the result of the prediction made of the compatibility by the predicting unit 102c (for example, a score indicating the compatibility between the prediction target food and the prediction target drink).

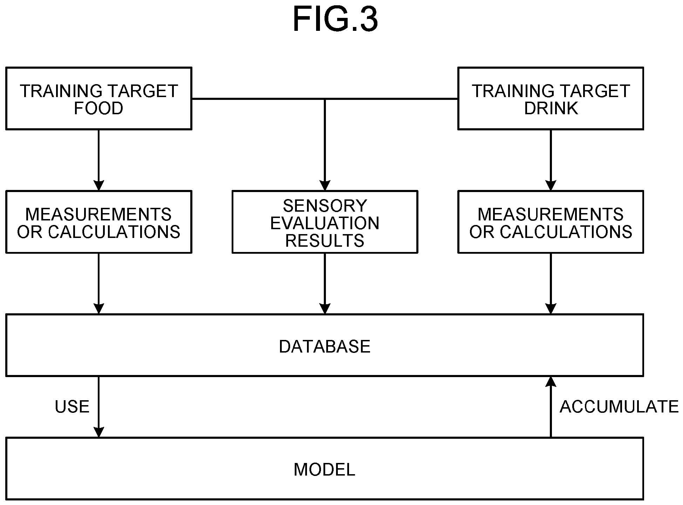

The constructing unit 102e constructs the model based on the flow of FIG. 3. More specifically, the constructing unit 102e constructs the model using machine learning (for example, Random Forest) based on the following: measurements that are values related to predetermined information when the measuring instrument measures the aroma components of training target food that is food targeted for the machine learning as the predetermined information, or calculations calculated based on the measurements (corresponding to "MEASUREMENTS OR CALCULATIONS" of training target food in FIG. 3); measurements that are values related to predetermined information when the measuring instrument measures the aroma components of training target drink that is drink targeted for the machine learning as the predetermined information, or calculations calculated based on the measurements (corresponding to "MEASUREMENTS OR CALCULATIONS" of training target drink in FIG. 3); and results of evaluation manually made of the compatibility between the training target food and the training target drink (corresponding to "SENSORY EVALUATION RESULTS" in FIG. 3).

### 2. Processing Flow

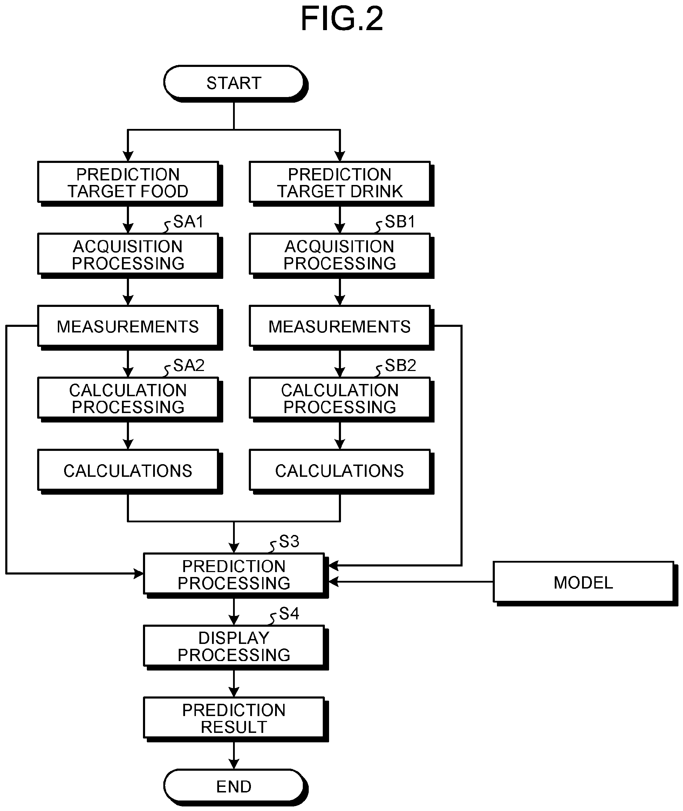

In this section, an example of a compatibility prediction flow according to the present embodiment will be explained with reference to FIG. 2.

### 2-1. Steps SA1 and SB1: Acquisition Processing

The acquiring unit 102a acquires measurements (for example, raw data obtained by measurement using the measuring instrument 200) that are values related to predetermined information when the measuring instrument 200 measures the aroma components of the prediction target food and the prediction target drink as the predetermined information (steps SA1 and SB1 of FIG. 2: acquisition processing). The acquiring unit 102a stores the acquired measurements into the acquisition result data 106a. For example, the predetermined information to be measured is measured by the aroma components being absorbed to absorption portions that are portions of the measuring instrument 200 for the aroma components to be absorbed to.

Examples of the measuring instrument 200 usable in the present embodiment are broadly classified into (1) measuring instruments characterized by use of a piezoelectric element (used in second to fifth practical examples below) and (2) measuring instruments characterized by observation of a change in the intensity of reflected light (used in a first practical example below).

### (1) Measuring Instrument Characterized by Use of Piezoelectric Element

When a measuring instrument 200 characterized by the use of a piezoelectric element is used, the predetermined information to be measured originates, for example, from a change in weight due to the absorption of the aroma components to sensitive membranes serving as the absorption portions fixed to piezoelectric elements disposed on beams of the measuring instrument. The change in weight is detected, for example, as a change in a vibration frequency (for example, resonant frequency) of the beams. Examples of the measuring instrument 200 characterized by the use of a piezoelectric element include nose@MEMS (registered trademark) manufactured by I-PEX Inc., which is used in the second to fifth practical examples below.

### (2) In Case of Measuring Instrument Characterized by Observation of Change in Intensity of Reflected Light

When a measuring instrument 200 characterized by the observation of a change in the intensity of reflected light is used, the absorption portion of the measuring instrument includes aptamers, for example. The predetermined information to be measured originates, for example, from a change in the intensity of single-wavelength reflected light from the aptamers due to absorption of the aroma components to the aptamers. In other words, the predetermined information to be measured (for example, the intensity of reflected light) is the intensity of single-wavelength reflected light observed on the aptamers when the aroma components are absorbed to the aptamers. Examples of the measuring instrument 200 characterized by the observation of a change in the intensity of reflected light include NeOse P3 manufactured by Aryballe Technologies.

Aside from the measuring instruments 200 explained in paragraphs (1) and (2), the following measuring instruments can also be used as the measuring instrument 200, for example. A measuring instrument including a given sensor element that can detect molecules to be detected dispersed in a wet layer and output a detection signal may be used as the measuring instrument 200, for example. Various chemical sensor elements for detecting chemical substances may be used as the sensor element. In view of detection and analysis of small amounts of various molecules to be detected in an analysis sample in combination with the wet layer and the aptamers, a sensor element selected from a group including electrochemical sensor elements, piezoelectric sensor elements, and optical sensor elements may be used.

Examples of the electrochemical sensor elements include a sensor element using EIS (Electrochemical Impedance Spectroscopy) (hereinafter, also referred to as an "EIS sensor element") and a sensor element using DPV (Differential Pulse Voltammetry) measurement (hereinafter, also referred to as a "DPV sensor element").

In the case of using the EIS sensor element, an alternating-current voltage is applied across the electrodes, and impedance is measured while changing the alternating-current frequency. The measured impedance is plotted as a curve on a graph with the real part on the horizontal axis and the imaginary part on the vertical axis. Such a graph is referred to as a "Nyquist diagram". The curve on the Nyquist diagram usually traces a semicircle. With aptamers fixed to (the electrodes of) the sensor element, combination of the aptamers with molecules to be detected changes charge transfer resistance and changes the diameter of the semicircle. The presence and quantity of molecules to be detected can be found out and calculated from the amount of change in the diameter.

Examples of the piezoelectric sensor element include a sensor element using a QCM (Quartz Crystal Microbalance) method (hereinafter, also referred to as a "QCM sensor element") and an MSS (Membrane-type Surface Stress) sensor element (hereinafter, may also be referred to as an "MSS sensor element").

In the case of using the QCM sensor element, electrodes are disposed on both sides of a thin quartz plate. Application of an alternating-current electrical field causes vibrations at a specific frequency (resonant frequency). Such an element is referred to as a "quartz oscillator". The resonant frequency varies with the mass of substances adhering to the electrodes of the quartz oscillator. With the aptamers fixed to (the electrodes of) the sensor element, combination of the aptamers with molecules to be detected changes the mass on the electrodes and changes the resonant frequency. The presence and quantity of molecules to be detected can be found out and calculated from the change in the frequency.

Examples of the optical sensor element include a sensor element using protein that forms nanostructures.

When the sensor element using protein that forms nanostructures is used, an element including a gold substrate coated with a surface-treated bacteriophage (virus) sensitive membrane is used. Absorption of aroma components to the phages causes a change in the nanostructures, which is detected as a change in color, or more specifically, red, green, and blue light absorbance.

Other examples of the measuring instrument 200 may include one including an FET (Field Effect Transistor), one including a PID (Photo Ionization Detector), and one including a CMOS (Complementary Metal Oxide Semiconductor).

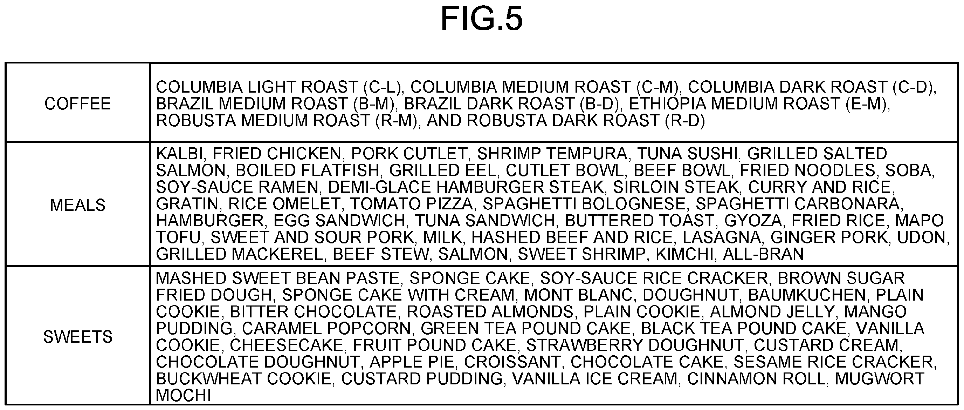

The prediction target drink will be explained. The prediction target drink may be any kind of drink. Examples include coffee, sake, wine, and tea. Examples of the coffee include eight types shown in FIG. 5, namely, Columbia light roast (C-L), Columbia medium roast (C-M), Columbia dark roast (C-D), Brazil medium roast (B-M), Brazil dark roast (B-D), Ethiopia medium roast (E-M), robusta medium roast (R-M), and robusta dark roast (R-D). Other examples include, though not shown in the diagram, Guatemala medium roast (G-M), Guatemala light roast (G-L), Guatemala dark roast (G-D), Tanzania medium roast (T-M), Tanzania light roast (T-L), Tanzania dark roast (T-D), T2ACMI Baisen (registered trademark) Brazil medium roast (Takumi B-M), T2ACMI Baisen (registered trademark) Columbia medium roast (Takumi C-M), and T2ACMI Baisen (registered trademark) robusta medium roast (Takumi R-M). Types of tea are not limited in particular. Examples include black tea and green tea.

The prediction target food will be explained. The prediction target food may be any kind of food. Examples include sweets and meals. Examples of the sweets include 32 types shown in FIG. 5. Examples of the meals include 40 types shown in FIG. 5. More specifically, examples of the prediction target food when the prediction target drink is coffee include sweets described in the first and second practical examples below. Examples of the prediction target food when the prediction target drink is sake include nibbles described in the third practical example below. Examples of prediction target food when the prediction target drink is wine include cheeses described in the fourth practical example below. Examples of the prediction target food when the prediction target drink is tea include sweets described in the fifth practical example below.

A method for subjecting the aroma components of the prediction target food and the prediction target drink to the measuring instrument 200 will be explained. The method for subjecting the aroma components of the prediction target food and the prediction target drink to the measuring instrument 200 is not limited in particular. For example, the method can be implemented by using an air supply system for subjecting an aroma to a sensor section and a preprocessing system for stabilizing sensor values. The preprocessing system includes a Dimroth condenser and a coolant circulator. A sensor system can be formed by connecting a liquid feed pump (LV-125A manufactured by NITTO KOHKI Co., Ltd.), a mass flow controller (manufactured by KOFLOC), a flask, a Dimroth condenser, and the measuring instrument 200 (aroma sensor) with each other by Teflon (registered trademark) tubes. The prediction target food is put in the flask. If the prediction target drink is coffee, brewed liquid prepared from coffee beans is put in the flask. The flask is kept warm on a hot plate heated to a predetermined temperature while air is sent from the liquid feed pump at a predetermined flowrate, whereby the aroma components of the prediction target food or the prediction target drink can be guided into the measuring instrument 200 (aroma sensor).

Properties of the measurements and a method for obtaining the measurements will be explained. An example of the measurements is a value measured using a surface plasmon resonance method (relative value with respect to a blank). When the measurements of a piece of prediction target food or a portion of prediction target drink are continuously measured, the measurements used for prediction by the predicting unit 102c are ones obtained within a time range where the measurements are stabilized or a time range where humidity is stabilized, for example.

### 2-2. Steps SA2 and SB2: Calculation Processing

The calculating unit 102b calculates the calculations based on the measurements stored in the acquisition result data 106a, using a predetermined analysis tool (such as Excel, JMP, and R) and a predetermined analysis technique (steps SA2 and SB2 in FIG. 2: calculation processing). The calculating unit 102b stores the calculated calculations into the calculation result data 106b.

### 2-3. Step S3: Prediction Processing

The predicting unit 102c predicts the compatibility between the prediction target food and the prediction target drink based on the model for predicting the compatibility between the prediction target food and the prediction target drink, using the measurements stored in the acquisition result data 106a or the calculations stored in the calculation result data 106b (step S3 in FIG. 2: prediction processing). For example, a model constructed by the constructing unit 102e to be described below and stored in the model data 106d can be used as the model.

The compatibility refers to whether the prediction target food and the prediction target drink go well with each other. Specifically, for example, the compatibility refers to that having the prediction target food and the prediction target drink at the same time (together) "promotes appetite", "has a synergistic effect in taste", and "suppresses perception of a component having a bad effect". Note that "at the same time" does not mean simultaneousness in a strict sense but covers cases with some differences in time. For example, "at the same time" covers the case of "having the prediction target food and swallowing most of it, then having the prediction target drink, and then having the prediction target food again". The compatibility can be rephrased with expressions such as "food pairing" and "food combination".

The prediction of the compatibility may be made in an either-or manner like whether the compatibility is good or bad, or more finely by converting the compatibility into numbers such as scores based on the model. The predicting unit 102c stores the result of the prediction as a prediction result into the prediction result data 106c.

### 2-4. Step S4: Display Processing

The displaying unit 102d displays the prediction results stored in the prediction result data 106c (step S4 in FIG. 2: display processing). An operator (for example, salesperson who suggests coffee to restaurants) can thus be informed of the prediction results of the compatibility between the prediction target food and the prediction target drink. All the processing is thereby ended (end in FIG. 2).

### 3. Summary of Present Embodiment

As has been explained above, the compatibility prediction method and the like according to the present embodiment enable accurate and easy prediction of the compatibility between food (for example, sweets or meals) and drink (for example, coffee) by measuring the aromas of the food and the drink.

In suggesting coffee to restaurants, various coffee blends to suit clients' products (food) are being developed and salespersons are struggling daily to win orders. However, under the present circumstances, salespersons have difficulty in providing convincing explanation for clients. There have also been problems that blended coffees are difficult to demonstrate advantage over competitors, and evaluation of food combinations is inevitably based on the panelist's subjective impression. In the present embodiment, good compatibility can be objectively demonstrated to clients by predicting and evaluating compatibility between the clients' products (food) and self-developed coffees. The prediction of compatibility also facilitates blending coffees. Moreover, salespersons can make clients realize that a certain coffee blend goes well with the customers' products (food), for example. Furthermore, blending ratios of a blended coffee (o% of C-M, Δ% of R-M, and ◊% of E-M) can be predicted, for example.

Using the measuring instrument 200, the compatibility prediction method and the like according to the present embodiment can analyze aroma components in a short time (for example, in a measurement time of 1 minute or so) compared to conventional aroma component analysis methods such as an analysis method using GS (gas chromatography).

### 4. Other Embodiments

Aside from the foregoing embodiment, the present invention may be practiced as various different embodiments without departing from the technical concept set forth in the claims.

For example, all or some of the processes explained to be automatically performed in the embodiment can be manually performed. All or some of the processes explained to be manually performed can be automatically performed by a known method.

The processing procedures, control procedures, specific names, information including registration data of the processes and parameters such as a search condition, screen examples, and database configurations described in this specification and shown in the drawings can be freely modified unless otherwise specified.

The shown components of the compatibility prediction apparatus 100 are functionally conceptual ones, and do not necessarily need to be physically configured as shown in the drawings.

For example, all or some of the processing functions of the compatibility prediction apparatus 100 or the processing functions performed by the control unit in particular may be implemented by the CPU and a program interpreted and executed by the CPU, or may be implemented by wired logic hardware. The program is recorded on a non-transitory computer-readable recording medium containing programmed commands for causing the information processing apparatus to perform the processing explained in the present embodiment, and mechanically read by the compatibility prediction apparatus 100 when needed. In other words, a computer program for giving commands to the CPU to perform various types of processing in cooperation with the OS is recorded in a storage unit such as the ROM and an HDD (Hard Disk Drive). The computer program is loaded into the RAM and thereby executed to constitute the control unit in cooperation with the CPU.

This computer program may be stored in an application program server connected to the compatibility prediction apparatus 100 via a given network, and can be downloaded in its entirety or in part when needed.

A program for performing the processing explained in the present embodiment may be stored in a non-transitory computer-readable recording medium, and can be configured as a program product. As employed herein, the "recording medium" shall cover a given "portable physical medium" such as a memory card, a USB (Universal Serial Bus) memory, an SD (Secure Digital) card, a flexible disk, a magnetooptical disk, a ROM, an EPROM (Erasable Programmable Read Only Memory), an EEPROM (registered trademark) (Electrically Erasable and Programmable Read Only Memory), a CD-ROM (Compact Disk Read Only Memory), an MO (MagnetoOptical disk), a DVD (Digital Versatile Disk), and a Blu-ray (registered trademark) Disc.

A "program" refers to a data processing method described in a given language or by a given description method, and may be in any format like source code and binary code. A "program" does not necessarily need to be a single configuration, and may include a distributed configuration of a plurality of modules or libraries, or one that implements the functions in cooperation with another program typified by an OS. Conventional configurations and procedures can be used as specific configurations and reading procedures for the apparatuses described in the embodiments to read a recording medium, and as installation procedures and the like after the reading.

Various databases and the like stored in the storage unit are storage units including memory devices such as a RAM and a ROM, stationary disk devices such as a hard disk, a flexible disk, and an optical disk. The storage unit stores various programs, tables, databases, webpage files, and the like for use in various types of processing and in providing a website.

The compatibility prediction apparatus 100 may be configured as an information processing apparatus such as an existing personal computer or workstation, and may be configured as an information processing apparatus to which given peripheral apparatuses are connected. The compatibility prediction apparatus 100 may be implemented by installing software (including a program or data) for implementing the processing explained in the present embodiment on the apparatus.

The specific configuration of distribution and integration of the apparatuses is not limited to the shown one. All or some of the apparatuses can be functionally or physically distributed or integrated in given units depending on various additions and the like or depending on functional loads. In other words, the foregoing embodiments may be carried out in any combination. The embodiments may be selectively carried out.

### First Practical Example

This practical example confirmed that compatibility (food pairings) between sweets and coffees can be predicted by the compatibility prediction method according to the present embodiment, using NeOse P3 manufactured by Aryballe Technologies.

### (1) Aroma Sensor Used and Measurement Principle

In this practical example, NeOse P3 manufactured by Aryballe Technologies was used as the aroma sensor. This sensor includes 64 types of substances fixed onto a metal thin film of a sensor element. The permittivity at the surface of the metal thin film changes due to absorption of aroma components, and the reflection angle at which surface plasmon resonance occurs changes. Differences in the reflection angle were detected by a light receptor and obtained as respective signals.

### (2) Construction of Sensor System

For aroma detection, an air supply system for subjecting aromas to the sensor section and a preprocessing system for stabilizing the sensor values are needed aside from the sensor section. The preprocessing system was constructed to include a Dimroth condenser and a coolant circulator. A liquid feed pump (LV-125A manufactured by NITTO KOHKI Co., Ltd.), a mass flow controller (manufactured by KOFLOC), a flask, and the Dimroth condenser were connected with each other by Teflon (registered trademark) tubes. A suction pump included in the measuring instrument 200 (aroma sensor) was used for suctioning.

### (3) Acquisition of Measurements by Aroma Sensor

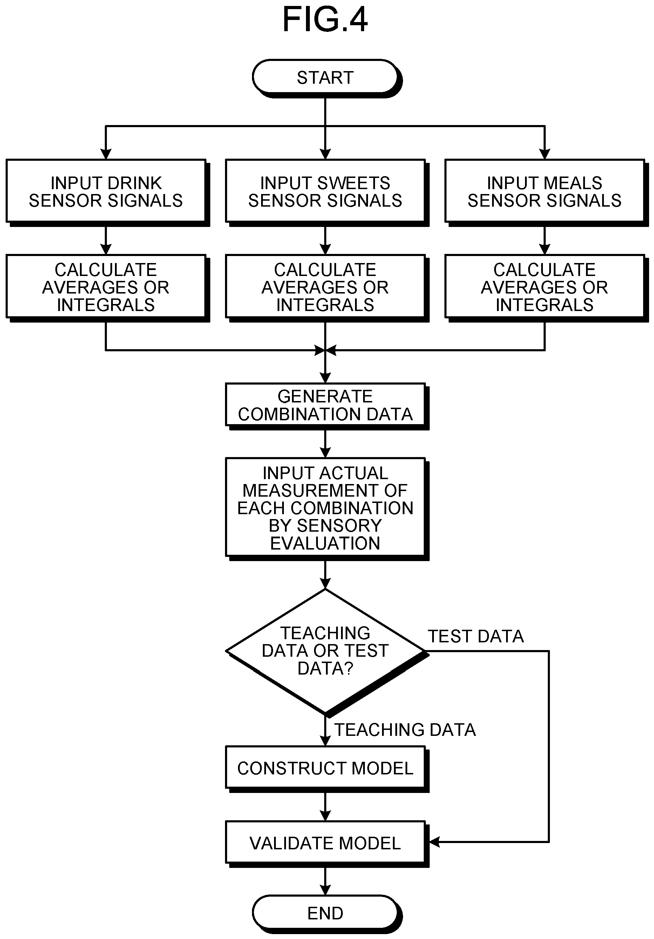

Operations performed in this practical example will be explained below with reference to the flow of FIG. 4. Initially, with the eight types of coffee explained in section 2-1 (C-L, C-M, C-D, B-M, B-D, E-M, R-M, and R-D) and 14 types of sweets (a soy-sauce rice cracker, brown sugar fried dough, a sponge cake with cream, a Mont Blanc, a doughnut, Baumkuchen, a plain cookie, bitter chocolate, roasted almonds, a plain cracker, almond jelly, mango pudding, caramel popcorn, and a fruit pound cake) as samples, aromas were guided into the aroma sensor in the following manner. Each of the eight types of coffee was put in a four-necked flask and kept warm on a hot plate heated to a predetermined temperature while air was sent from the liquid feed pump at a predetermined flowrate (1 L/min) to guide the aroma of the coffee into the aroma sensor (corresponding to "INPUT DRINK SENSOR SIGNALS" in FIG. 4). Each of the 14 types of sweets was put in the flask and kept warm on the hot plate heated to the predetermined temperature while air was sent from the liquid feed pump at the predetermined flowrate (1 L/min) to guide the aroma of the food into the aroma sensor (corresponding to "INPUT SWEETS SENSOR SIGNALS" and "INPUT MEALS SENSOR SIGNALS" in FIG. 4). When the outputs (measurements) of the aroma sensor were stabilized, concerning respective 64 types of sensor signals, averages of the five-second measurements on each of the coffees and averages of the five-second measurements on each of the 14 types of sweets were acquired (corresponding to "CALCULATE AVERAGES OR INTEGRALS" in FIG. 4).

### (4) Generation of Sensory Evaluation Data

Next, the compatibility of the 14 types of sweets with the eight types of coffee was manually evaluated (sensory evaluation). The sensory evaluation was performed by giving a score on a scale of -4 to +4 (the higher the number, the better the compatibility). The procedure included initially having food and swallowing most of it, then having coffee, and then having the food again and making a sensory evaluation. The results correspond to the sensory evaluation data 106e.

### (5) Construction of Compatibility Prediction Model

Next, a list of combinations of the averages of the measurements of the coffees and the averages of the measurements of the foods was generated, and the sensory evaluation data 106e was associated with the generated combinations. For example, 129 values including the 64 averages of brown sugar fried dough among the foods, the 64 averages of C-L among the coffees, and a score of the sensory evaluation data 106e on the combination of brown sugar fried dough and C-L were associated as a set of combination data. As a result, (the eight types of coffee) × (the 14 types of sweets) = 112 sets of 129-valued combination data were generated (corresponding to "GENERATE COMBINATION DATA" and "INPUT ACTUAL MEASUREMENT OF EACH COMBINATION BY SENSORY EVALUATION" in FIG. 4). The generated 112 pieces of combination data were randomly divided into teaching data and test data at 7:3. Using the teaching data (training data) (corresponding to the branch "TEACHING DATA" at "TEACHING DATA OR TEST DATA?" in FIG. 4), a compatibility prediction model was constructed by a Random forest (corresponding to "CONSTRUCT MODEL" in FIG. 4) .

### (6) Validation of Constructed Compatibility Prediction Model

Finally, using the test data (corresponding to the branch "TEST DATA" at "TEACHING DATA OR TEST DATA?" in FIG. 4), the constructed compatibility prediction model was evaluated (validated) (corresponding to "VALIDATE MODEL" in FIG. 4).

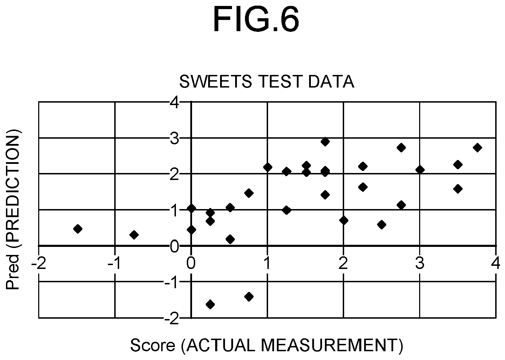

The correlation coefficient of the test data, or sweets test data (FIG. 6), was calculated to be 0.60. The correlation coefficient was as high as above 0.6. In other words, the values predicted by the constructed compatibility prediction model and the actual measurements by the sensory evaluation were found to be highly correlative. Since the correctness of the constructed compatibility prediction model was proved, it was found that compatibility (food pairings) between sweets and coffees can be predicted using the constructed compatibility prediction model.

### Second Practical Example

This practical example confirmed that compatibility (food pairings) between sweets and coffees can be predicted by the compatibility prediction method according to the present embodiment, using nose@MEMS (registered trademark) manufactured by I-PEX Inc.

### (1) Aroma Sensor Used and Measurement Principle

In this practical example, nose@MEMS (registered trademark) manufactured by I-PEX Inc. was used as the aroma sensor. This sensor includes 20 types of sensitive membranes fixed onto metal thin films of sensor elements. A total of eight types of sensor elements can be used, which change in weight due to absorption of aroma components. Changes in the weights were detected by piezoelectric elements and obtained as respective signals.

### (2) Construction of Sensor System

For aroma detection, a preprocessing system and an air supply system for subjecting aromas to the sensor section are needed aside from the sensor section. The preprocessing system was intended to stabilize sensor values and constructed to include a Dimroth condenser and a coolant circulator. As for the air supply system, a pump accompanying the sensor was connected to a flask by a Teflon (registered trademark) tube, and the aromas were guided into the measuring instrument 200 (aroma sensor) through the preprocessing system.

### (3) Acquisition of Measurements by Aroma Sensor

Operations performed in this practical example will be explained below with reference to the flow of FIG. 4. Initially, with 17 types of coffee (B-M, B-D, C-M, C-L, C-D, E-M, G-M, G-L, G-D, R-M, R-D, T-M, T-L, T-D, Takumi B-M, Takumi C-M, and Takumi R-M) and 19 types of sweets (an apple pie, a sponge cake, a chocolate cake, fried dough, a sesame rice cracker, a cinnamon roll, a sponge cake with cream, a strawberry doughnut, a buckwheat cookie, a cheesecake, a custard doughnut, Baumkuchen, bitter chocolate, a fruit cake, a soy-sauce rice cracker, a plain cookie, a Mont Blanc, a mugwort mochi, and a plain cracker) as samples, aromas were guided into the aroma sensor in the following manner. Each of the 17 types of coffee was put in a three-necked flask and kept warm on a hot plate heated to a predetermined temperature while air was sent from the pump at a predetermined flowrate (1 L/min) to guide the aroma of the coffee into the aroma sensor (corresponding to "INPUT DRINK SENSOR SIGNALS" in FIG. 4). Each of the 19 types of sweets was put in the flask and kept warm on the hot plate heated to the predetermined temperature while air was sent from the air pump at the predetermined flowrate (1 L/min) to guide the aroma of the food into the aroma sensor (corresponding to "INPUT SWEETS SENSOR SIGNALS" and "INPUT MEALS SENSOR SIGNALS" in FIG. 4). When the outputs (measurements) of the aroma sensor were stabilized, concerning respective 160 types of sensor signals (= 20 types of sensitive membranes × eight types of sensor elements), integrals of three times measurements on each of the coffees for one minute and integrals of three times measurements on each of the sweets for one minute were acquired (corresponding to "CALCULATE AVERAGES OR INTEGRALS" in FIG. 4).

### (4) Generation of Sensory Evaluation Data

Next, the compatibility of the 19 types of sweets with the 17 types of coffee was manually evaluated (sensory evaluation). The sensory evaluation was performed by giving a score on a scale of -4 to +4 (the higher the number, the better the compatibility). The procedure included initially having food and swallowing most of it, then having coffee, and then having the food again and making a sensory evaluation. The results correspond to the sensory evaluation data 106e.

### (5) Construction of Compatibility Prediction Model

Next, a list of combinations of the averages of the measurements of the coffees and the averages of the measurements of the foods was generated, and the sensory evaluation data 106e was associated with the generated combinations. For example, values including the 160 integrals of fried dough among the foods, the 160 integrals of C-L among the coffees, and a score of the sensory evaluation data 106e on the combination of fried dough and C-L were associated as a set of combination data. As a result, (the 17 types of coffee) × (the 19 types of sweets) = 323 sets of 321-valued combination data were generated (corresponding to "GENERATE COMBINATION DATA" and "INPUT ACTUAL MEASUREMENT OF EACH COMBINATION BY SENSORY EVALUATION" in FIG. 4). The generated combination data was randomly divided into teaching data and test data at 7:3. Using the teaching data (training data) (corresponding to the branch "TEACHING DATA" at "TEACHING DATA OR TEST DATA" in FIG. 4), a compatibility prediction model was constructed by a Random forest (corresponding to "CONSTRUCT MODEL" in FIG. 4).

### (6) Validation of Constructed Compatibility Prediction Model

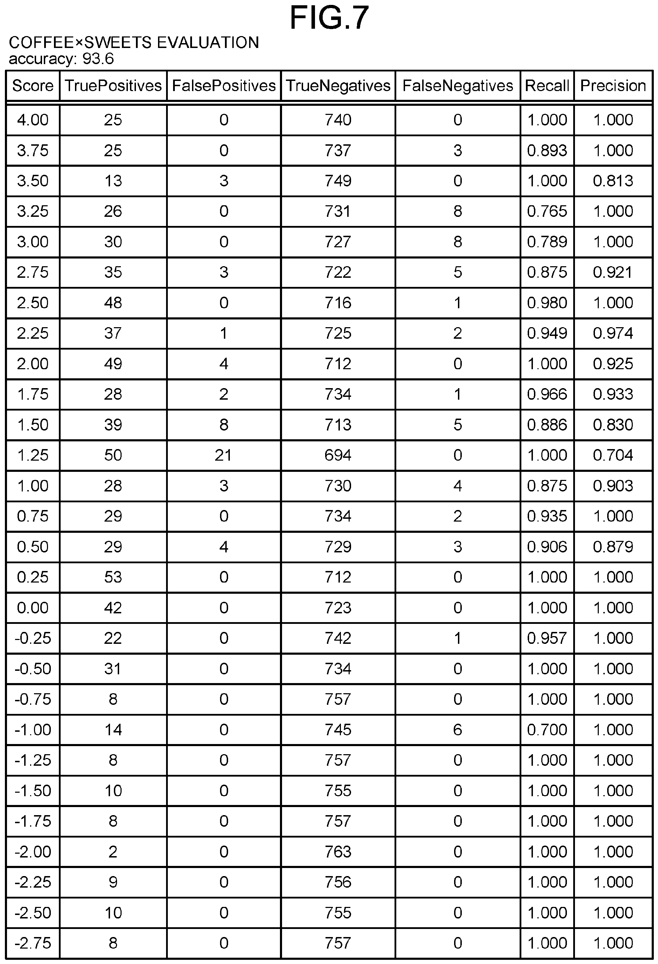

Finally, using the test data (corresponding to the branch "TEST DATA" at "TEACHING DATA OR TEST DATA" in FIG. 4), the constructed compatibility prediction model was evaluated (validated) by cross-validation (corresponding to "VALIDATE MODEL" in FIG. 4). The result is shown in FIG. 7. Cross-validation is a statistics technique for dividing sample data, analyzing a part of the data, and testing the analysis using the remaining data to assess the validity of the analysis.

How to read FIG. 7 will be explained with a focus on the row of Score 4.00, for example. A True Positives (TP) value of 25 is the number of pieces of data where a food combination with the result of sensory evaluation of 4.00 was successfully correctly evaluated to be 4.00 using the constructed prediction model. A False Positives (FP) value of 0 is the number of pieces of data where a food combination with the result of sensory evaluation of other than 4.00 was erroneously evaluated to be 4.00 using the constructed compatibility prediction model. A True Negatives (TN) value of 740 is the number of pieces of data where a food combination with the result of sensory evaluation of other than 4.00 was successfully correctly evaluated to not be 4.00 using the constructed compatibility prediction model. A False Negatives (FN) value of 0 is the number of pieces of data where a food combination with the result of sensory evaluation of 4.00 was erroneously evaluated to not be 4.00 using the constructed compatibility prediction model. A detection ratio (recall) is the ratio of pieces of data where the food combination is successfully correctly evaluated to be 4.00 using the constructed compatibility prediction model among the pieces of data where the result of sensory evaluation is 4.00, and is calculated by a calculation formula "TP/(TP+FN)". A precision is the ratio of pieces of data where the result of sensory evaluation is 4.00 among the pieces of data where the food combination is evaluated to be 4.00 using the constructed compatibility prediction model, and is calculated by a calculation formula "TP/(TP+FP)".

For each score, an accuracy is calculated by a calculation formula "(TP+TN)/(TP+FN+FP+TN)". An average of the accuracies of the respective calculated scores was calculated to be 0.936. The correlation coefficient was as high as above 0.9. In other words, the values predicted by the constructed compatibility prediction model and the actual measurements by the sensory evaluation were found to be highly correlative. Since the correctness of the constructed compatibility prediction model was proved, it was found that compatibility (food pairings) between sweets and coffees can be predicted using the constructed compatibility prediction model.

### Third Practical Example

This practical example confirmed that compatibility (food pairings) between nibbles and sake can be predicted by the compatibility prediction method according to the present embodiment, using nose@MEMS (registered trademark) manufactured by I-PEX Inc.

### (1) Aroma Sensor Used and Measurement Principle

The aroma sensor used in this practical example and the measurement principle thereof were the same as those in the second practical example. An explanation thereof will thus be omitted.

### (2) Construction of Sensor System

The sensor system used in this practical example was also the same as that in the second practical example. An explanation thereof will thus be omitted.

### (3) Acquisition of Measurements by Aroma Sensor

Operations performed in this practical example will be explained below with reference to the flow of FIG. 4. Initially, with 12 types of sake (Chiyomusubi Daiginjo, Chiyomusubi Kimoto Jozo, Chiyomusubi Goriki 40, Oni no Shitaburui, Chiyomusubi Junmai Ginjo Goriki 60, Chiyomusubi Junmai Ginjo Goriki 50, Chiyomusubi Junkara, Chiyomusubi Tokubetsu Junmai Ginjo, Hakkaisan Honjozo, Ozeki Honjozo, Dassai Junmai Ginjo 45, and Dassai Junmai Daiginjo 39) and six types of food, mainly nibbles (crab butter, almond jelly, bitter chocolate, a buckwheat cookie, dried young sardines, and ray fin) as samples, aromas were guided into the aroma sensor in the following manner. Each of the 12 types of sake was put in a three-necked flask, and the aroma of the sake was sent from the air pump at a predetermined flowrate (1 L/min) and guided into the aroma sensor (corresponding to "INPUT DRINK SENSOR SIGNALS" in FIG. 4). Each of the six types of food was put in the flask and kept warm on the hot plate heated to the predetermined temperature while air was sent from the air pump at the predetermined flowrate (1 L/min) to guide the aroma of the food into the aroma sensor (corresponding to "INPUT SWEETS SENSOR SIGNALS" and "INPUT MEALS SENSOR SIGNALS" in FIG. 4). When the outputs (measurements) of the aroma sensor were stabilized, concerning respective 160 types of sensor signals (= 20 types of sensitive membranes × eight types of sensor elements), integrals of three times measurements on each of the sakes for one minute and integrals of three times measurements on each of the foods for one minute were acquired (corresponding to "CALCULATE AVERAGES OR INTEGRALS" in FIG. 4).

### (4) Generation of Sensory Evaluation Data

Next, the compatibility of the six types of food with the 12 types of sake was manually evaluated (sensory evaluation). The sensory evaluation was performed by giving a score on a scale of -2 to +2 (the higher the number, the better the compatibility). The procedure included initially having food and swallowing most of it, then having coffee, and then having the food again and making a sensory evaluation. The results correspond to the sensory evaluation data 106e.

### (5) Construction of Compatibility Prediction Model

Next, a list of combinations of the averages of the measurements of the sakes and the averages of the measurements of the foods was generated, and the sensory evaluation data 106e was associated with the generated combinations. For example, values including the 160 integrals of crab butter among the foods, the 160 integrals of Chiyomusubi Daiginjo among the sakes, and a score of the sensory evaluation data 106e on the combination of crab butter and Chiyomusubi Daiginjo were associated as a set of combination data. As a result, the 12 types of sake × (the six types of food) = 72 sets of 321-valued combination data were generated (corresponding to "GENERATE COMBINATION DATA" and "INPUT ACTUAL MEASUREMENT OF EACH COMBINATION BY SENSORY EVALUATION" in FIG. 4). The generated combination data was randomly divided into teaching data and test data at 9:1. Using the teaching data (training data) (corresponding to the branch "TEACHING DATA" at "TEACHING DATA OR TEST DATA" in FIG. 4), a compatibility prediction model was constructed by a Random forest (corresponding to "CONSTRUCT MODEL" in FIG. 4). JMP, R, Excel, KNIME, and the like were used as statistics analysis software.

### (6) Validation of Constructed Compatibility Prediction Model

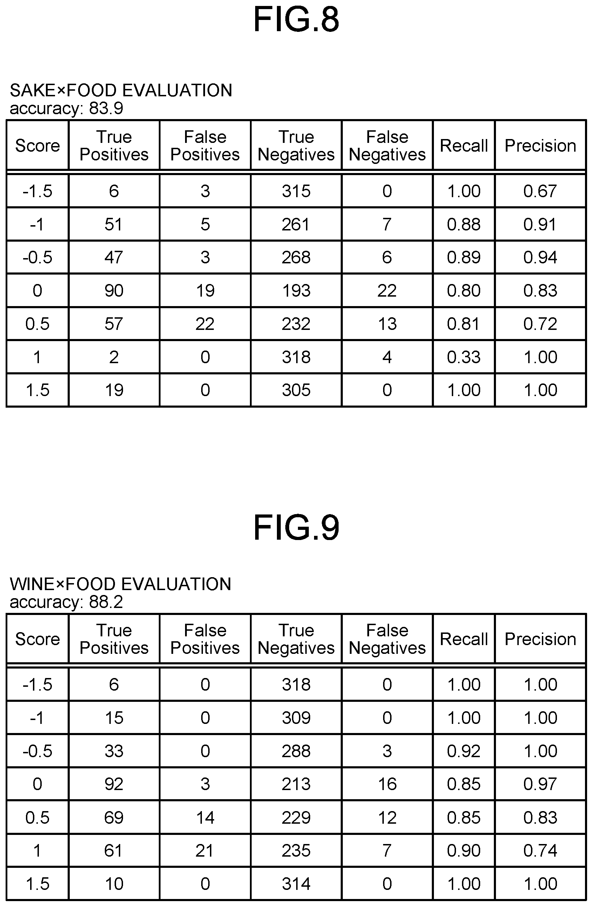

Finally, using the test data (corresponding to the branch "TEST DATA" at "TEACHING DATA OR TEST DATA" in FIG. 4), the constructed compatibility prediction model was evaluated (validated) by cross-validation (corresponding to "VALIDATE MODEL" in FIG. 4). The result is shown in FIG. 8. How to read FIG. 8 is the same as with FIG. 7 explained in the second practical example. An explanation thereof will thus be omitted.

Using the same method as that explained in the second practical example, the accuracy of each score was calculated. An average of the calculated accuracies of the respective scores was calculated to be 0.839. The correlative coefficient was as high as above 0.8. In other words, the values predicted by the constructed compatibility prediction model and the actual measurements by the sensory evaluation were found to be highly correlative. Since the correctness of the constructed compatibility prediction model was proved, it was found that compatibility (food pairings) between nibbles and sake can be predicted using the constructed compatibility prediction model.

### Fourth Practical Example

This practical example confirmed that compatibility (food pairings) between cheeses and wines can be predicted by the compatibility prediction method according to the present embodiment, using nose@MEMS (registered trademark) manufactured by I-PEX Inc.

### (1) Aroma Sensor Used and Measurement Principle

The aroma sensor used in this practical example and the measurement principle thereof were the same as those in the second practical example. An explanation thereof will thus be omitted.

### (2) Construction of Sensor System

The sensor system used in this practical example was also the same as that in the second practical example. An explanation thereof will thus be omitted.

### (3) Acquisition of Measurements by Aroma Sensor

Operations performed in this practical example will be explained below with reference to the flow of FIG. 4. Initially, with six types of wine (two types of white wine, two types of sparkling wine, and two types of red wine) and 11 types of food, mainly cheeses (Camembert, Brie, washed-rind cheese, Gorgonzola, Gouda, cheddar, Parmesan, Mimolette, dried young sardines, ray fin, and crab butter) as samples, aromas were guided into the aroma sensor in the following manner. Each of the six types of wine was put in a four-necked flask, and air was sent from the air pump at a predetermined flowrate (1 L/min) to guide the aroma of the wine into the aroma sensor (corresponding to "INPUT DRINK SENSOR SIGNALS" in FIG. 4). Each of the 11 types of food was put in the flask and kept warm on the hot plate heated to the predetermined temperature while air was sent from the air pump at the predetermined flowrate (1 L/min) to guide the aroma of the food into the aroma sensor (corresponding to "INPUT FOOD SENSOR SIGNALS" and "INPUT MEALS SENSOR SIGNALS" in FIG. 4) When the outputs (measurements) of the aroma sensor were stabilized, concerning respective 160 types of sensor signals (= 20 types of sensitive membranes × eight types of sensor elements), integrals of three times measurements on each of the wines for one minute and integrals of three times measurements on each of the foods for one minute were acquired (corresponding to "CALCULATE AVERAGES OR INTEGRALS" in FIG. 4).

### (4) Generation of Sensory Evaluation Data

Next, the compatibility of the 11 types of foods with the six types of wine was manually evaluated (sensory evaluation). The sensory evaluation was performed by giving a score on a scale of -2 to +2 (the higher the number, the better the compatibility). The procedure included initially having food and swallowing most of it, then having wine, and then having the food again and making a sensory evaluation. The results correspond to the sensory evaluation data 106e.

### (5) Construction of Compatibility Prediction Model

Next, a list of combinations of the averages of the measurements of the wines and the averages of the measurements of the foods was generated, and the sensory evaluation data 106e was associated with the generated combinations. For example, 321 values including the 160 integrals of crab butter among the foods, the 160 averages of a white wine among the wines, and a score of the sensory evaluation data 106e on the combination of crab butter and the white wine were associated as a set of combination data. As a result, (the six types of wine) × (the 11 types of food) = 66 sets of 321-valued combination data were generated (corresponding to "GENERATE COMBINATION DATA" and "INPUT ACTUAL MEASUREMENT OF EACH COMBINATION BY SENSORY EVALUATION" in FIG. 4). The generated combination data was randomly divided into teaching data and test data at 9:1. Using the teaching data (training data) (corresponding to the branch "TEACHING DATA" at "TEACHING DATA OR TEST DATA" in FIG. 4), a compatibility prediction model was constructed by a Random forest (corresponding to "CONSTRUCT MODEL" in FIG. 4). JMP, R, Excel, KNIME, and the like were used as statistics analysis software.

### (6) Validation of Constructed Compatibility Prediction Model

Finally, using the test data (corresponding to the branch "TEST DATA" at "TEACHING DATA OR TEST DATA" in FIG. 4), the constructed compatibility prediction model was evaluated (validated) by cross-validation (corresponding to "VALIDATE MODEL" in FIG. 4). The result is shown in FIG. 9. How to read FIG. 9 is the same as with FIG. 7 explained in the second practical example. An explanation thereof will thus be omitted.

Using the same method as that explained in the second practical example, the accuracy of each score was calculated. An average of the calculated accuracies of the respective scores was calculated to be 0.882. The correlative coefficient was as high as above 0.8. In other words, the values predicted by the constructed compatibility prediction model and the actual measurements by the sensory evaluation were found to be highly correlative. Since the correctness of the constructed compatibility prediction model was proved, it was found that compatibility (food pairings) between cheeses and wines can be predicted using the constructed compatibility prediction model.

### Fifth Practical Example

This practical example confirmed that compatibility (food pairings) between sweets and teas can be predicted by the compatibility prediction method according to the present embodiment, using nose@MEMS (registered trademark) manufactured by I-PEX Inc.

### (1) Aroma Sensor Used and Measurement Principle

The aroma sensor used in this practical example and the measurement principle thereof were the same as those in the second practical example. An explanation thereof will thus be omitted.

### (2) Construction of Sensor System

The sensor system used in this practical example was also the same as that in the second practical example. An explanation thereof will thus be omitted.

### (3) Acquisition of Measurements by Aroma Sensor

Operations performed in this practical example will be explained below with reference to the flow of FIG. 4. Initially, with six types of tea (black tea, flavored tea 1, flavored tea 2, green tea, roasted green tea, and lemongrass tea) and 11 types of food, mainly sweets (Baumkuchen, grilled salted mackerel, bitter chocolate, Magari Senbei [rice cracker], gyoza, custard pudding, cheddar, a sponge cake with cream, an apple pie, crab butter, and milk) as samples, aromas were guided into the aroma sensor in the following manner. Each of the six types of tea was put in a three-necked flask and kept warm on the hot plate heated to the predetermined temperature while air was sent from the air pump at a predetermined flowrate (1 L/min) to guide the aroma of the tea into the aroma sensor (corresponding to "INPUT DRINK SENSOR SIGNALS" in FIG. 4). Each of the 11 types of food was put in the flask and kept warm on the hot plate heated to the predetermined temperature while air was sent from the air pump at the predetermined flowrate (1 L/min) to guide the aroma of the food into the aroma sensor (corresponding to "INPUT FOOD SENSOR SIGNALS" and "INPUT MEALS SENSOR SIGNALS" in FIG. 4). When the outputs (measurements) of the aroma sensor were stabilized, concerning respective 160 types of sensor signals (= 20 types of sensitive membranes × eight types of sensor elements), integrals of three times measurements on each of the teas for one minute and integrals of three times measurements on each of the foods for one minute were acquired (corresponding to "CALCULATE AVERAGES OR INTEGRALS" in FIG. 4).

### (4) Generation of Sensory Evaluation Data

Next, the compatibility of the 11 types of food with the six types of tea was manually evaluated (sensory evaluation). The sensory evaluation was performed by giving a score on a scale of -2 to +2 (the higher the number, the better the compatibility). The procedure included initially having food and swallowing most of it, then having tea, and then having the food again and making a sensory evaluation. The results correspond to the sensory evaluation data 106e.

### (5) Construction of Compatibility Prediction Model

Next, a list of combinations of the averages of the measurements of the teas and the averages of the measurements of the foods was generated, and the sensory evaluation data 106e was associated with the generated combinations. For example, 321 values including the 160 integrals of crab butter among the foods, the 160 averages of black tea among the teas, and a score of the sensory evaluation data 106e on the combination of crab butter and black tea were associated as a set of combination data. As a result, the six types of tea × (the 11 types of food) = 66 sets of 321-valued combination data were generated (corresponding to "GENERATE COMBINATION DATA" and "INPUT ACTUAL MEASUREMENT OF EACH COMBINATION BY SENSORY EVALUATION" in FIG. 4). The generated combination data was randomly divided into teaching data and test data at 9:1. Using the teaching data (training data) (corresponding to the branch "TEACHING DATA" at "TEACHING DATA OR TEST DATA" in FIG. 4), a compatibility prediction model was constructed by a Random forest (corresponding to "CONSTRUCT MODEL" in FIG. 4). JMP, R, Excel, KNIME, and the like were used as statistics analysis software.

### (6) Validation of Constructed Compatibility Prediction Model

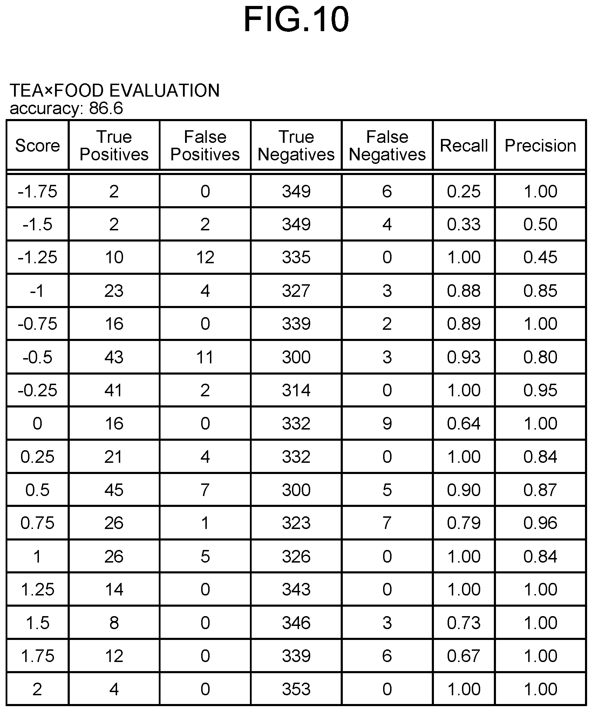

Finally, using the test data (corresponding to the branch "TEST DATA" at "TEACHING DATA OR TEST DATA" in FIG. 4), the constructed compatibility prediction model was evaluated (validated) by cross-validation (corresponding to "VALIDATE MODEL" in FIG. 4). The result is shown in FIG. 10. How to read FIG. 10 is the same as with FIG. 7 explained in the second practical example. An explanation thereof will be omitted.

Using the same method as explained in the second practical example, the accuracy of each score was calculated. An average of the calculated accuracies of the respective scores was calculated to be 0.866. The correlative coefficient was as high as above 0.8. In other words, the values predicted by the constructed compatibility prediction model and the actual measurements by the sensory evaluation were found to be highly correlative. Since the correctness of the constructed compatibility prediction model was proved, it was found that compatibility (food pairings) between sweets and teas can be predicted using the constructed compatibility prediction model.

### INDUSTRIAL APPLICABILITY

The present invention is useful in the fields of food, medical, and industrial products, for example, and extremely useful in the field of food in particular.

### EXPLANATION OF LETTERS OR NUMERALS

- 100: compatibility prediction apparatus
- 102: control unit
- 102a: acquiring unit
- 102b: calculating unit
- 102c: predicting unit
- 102d: displaying unit
- 102e: constructing unit
- 104: communication interface unit
- 106: storage unit
- 106a: acquisition result data
- 106b: calculation result data
- 106c: prediction result data
- 106d: model data
- 106e: sensory evaluation data
- 108: input/output interface unit
- 112: input apparatus
- 114: output apparatus
- 200: measuring instrument
- 300: network

## Claims

1. A compatibility prediction method comprising:
a predicting step of predicting compatibility between prediction target food, which is food targeted for compatibility prediction, and prediction target drink, which is drink targeted for the compatibility prediction, based on a model for predicting the compatibility between the prediction target food and the prediction target drink, using measurements that are values related to predetermined information when a measuring instrument measures aroma components of the prediction target food and the prediction target drink as the predetermined information, or calculations calculated based on the measurements.

2. The compatibility prediction method according to claim 1, wherein the predetermined information to be measured is measured by the aroma components being absorbed to an absorption portion that is a portion of the measuring instrument for the aroma components to be absorbed to.

3. The compatibility prediction method according to claim 1 or 2, wherein the predetermined information to be measured originates from a change in weight due to absorption of the aroma components to a sensitive membrane serving as the absorption portion fixed to a piezoelectric element disposed on a beam of the measuring instrument.

4. The compatibility prediction method according to claim 3, wherein the change in weight is detected as a change in a vibration frequency of the beam.

5. The compatibility prediction method according to claim 4, wherein the vibration frequency is a resonant frequency.

6. The compatibility prediction method according to claim 2, wherein:
the absorption portion of the measuring instrument includes an aptamer; and
the predetermined information to be measured originates from a change in an intensity of single-wavelength reflected light from the aptamer due to absorption of the aroma components to the aptamer.

7. The compatibility prediction method according to claim 1, 2, or 6, wherein the measurement is a value measured using a surface plasmon resonance method.

8. The compatibility prediction method according to any one of claims 1 to 7, wherein when the measurements of a piece of the prediction target food or a portion of the prediction target drink are continuously measured, the measurements used for prediction are ones obtained within a time range where the measurements are stabilized or a time range where humidity is stabilized.

9. The compatibility prediction method according to any one of claims 1 to 8, wherein the model is constructed using machine learning based on: measurements that are values related to predetermined information when the measuring instrument measures aroma components of training target food that is food targeted for the machine learning as the predetermined information, or calculations calculated based on the measurements; measurements that are values related to predetermined information when the measuring instrument measures aroma components of training target drink that is drink targeted for the machine learning as the predetermined information, or calculations calculated based on the measurements; and results of evaluation manually made of compatibility between the training target food and the training target drink.

10. The compatibility prediction method according to any one of claims 1 to 9, wherein the compatibility is predicted by converting the compatibility into numbers at the predicting step.

11. The compatibility prediction method according to any one of claims 1 to 10, wherein the prediction target food includes sweets or meals.

12. The compatibility prediction method according to any one of claims 1 to 11, wherein the prediction target drink is coffee, sake, wine, or tea.

13. A compatibility prediction apparatus comprising a control unit, the control unit including a predicting unit that predicts compatibility, between prediction target food that is food targeted for the compatibility prediction and prediction target drink that is drink targeted for the compatibility prediction, based on a model for predicting the compatibility between the prediction target food and the prediction target drink, using measurements that are values related to predetermined information when a measuring instrument measures aroma components of the prediction target food and the prediction target drink as the predetermined information, or calculations calculated based on the measurements.

14. A compatibility prediction program for causing an information processing apparatus, including a control unit, to perform, the program comprising:
a predicting step of predicting compatibility, between prediction target food that is food targeted for compatibility prediction and prediction target drink that is drink targeted for the compatibility prediction, based on a model for predicting the compatibility between the prediction target food and the prediction target drink, using measurements that are values related to predetermined information when a measuring instrument measures aroma components of the prediction target food and the prediction target drink as the predetermined information, or calculations calculated based on the measurements, to be executed by the control unit.
